# EUROPÄISCHE PATENTANMELDUNG

(11) **EP 4 173 933 A1**
(43) Veröffentlichungstag der Anmeldung: **03.05.2023**
(21) Anmeldenummer: 22202714.6
(22) Anmeldetag: 20.10.2022
(51) Int. Cl.: B62D 33/04

(54) **HALTEVORRICHTUNG, ISOLIERPANEEL MIT EINER HALTEVORRICHTUNG, FAHRZEUGAUFBAU, INSBESONDERE KÜHLFAHRZEUGAUFBAU, VERWENDUNG EINER SOLCHEN HALTEVORRICHTUNG**

(30) Priorität: 29.10.2021 DE 102021128294
(71) Anmelder: Kögel Trailer GmbH, 89349 Burtenbach (DE)
(72) Erfinder: BIRLE, Günter, 86877 Walkertshofen (DE)
(74) Vertreter: Meissner Bolte Partnerschaft mbB

(57) **Zusammenfassung**

Die Erfindung betrifft eine Haltevorrichtung (10) für ein Kühlaggregat eines Fahrzeugaufbaus (20), die wenigstens zwei parallel verlaufende Profilschienen (11) aufweist, die auf einer gemeinsamen Ebene angeordnet und voneinander beabstandet sind, wobei die Profilschienen (11) jeweils wenigstens einen Kanal (12) und wenigstens ein Anlageelement (13) für das Kühlaggregat aufweisen, das an dem Kanal (12) angeordnet ist, wobei das Anlageelement (13) wenigstens eine in den Kanal (12) mündende Öffnung (14) mit einem Durchtrittsbereich (15) und einem Fixierbereich (16) für ein Haltemittel (17) des Kühlaggregats aufweist, wobei die Öffnung (14) schlüssellochförmig ist.

## Beschreibung

Die Erfindung betrifft eine Haltevorrichtung, ein Isolierpaneel mit einer Haltevorrichtung, einen Fahrzeugaufbau, insbesondere einen Kühlfahrzeugaufbau, sowie die Verwendung einer Haltevorrichtung.

Kühlfahrzeuge sind mit thermisch isolierten Fahrzeugaufbauten ausgestattet, um beispielsweise kälteempfindliche Waren, aber auch im Besonderen verderbliche Lebensmittel gekühlt in der Kette von Erzeuger, Verarbeiter und Verkäufer transportieren zu können. Zur Kühlung der Luft im Inneren der Fahrzeugaufbauten sind Kühlaggregate vorgesehen, welche die Luft aus dem Inneren ansaugen und anschließend gekühlt wieder in diesen abgeben. Häufig ist ein Luftführungssystem im Inneren der Fahrzeugaufbauten zur gleichmäßigen Luftverteilung angeordnet, das mit dem Kühlaggregat verbunden ist. Ein Beispiel dafür geht aus der DE 100 29 355 A1 hervor, die auf die Anmelderin zurückgeht. Das Kühlaggregat ist dabei an der Stirnwandaußenseite des Fahrzeugaufbaus angeordnet. Zum Ansaugen und Abgeben der Kühlluft ist in der Stirnwand eine Öffnung ausgebildet, die das Kühlaggregat mit dem Innenraum verbindet.

Um Kühlaggregate an Wandpaneelen von Fahrzeugaufbauten zu befestigen, ist beispielsweise aus der EP 3 257 705 A1 bekannt, in die Kernschicht der Wandpaneele längliche Profilelemente mit Gewindehülsen zu integrieren. Die Gewindehülsen sind durch Öffnungen in der Blech-Decklage der Wandpaneele von außen zugänglich.

In der EP 2 116 451 A1 ist eine Stirnwand eines isolierten Sattelaufliegers beschrieben, die zur Montage eines Kühlaggregates in die Stirnwand eingebettete Tragprofile aufweist. Die Tragprofile sind in einer aufgeschäumten Kernschicht angeordnet, die außen und innen mit Blechlagen versehen ist.

Nachteilig bei den vorgenannten Haltevorrichtungen ist die in die Wandpaneele integrierte Anordnung. Im befestigten Zustand eines Kühlaggregates wirken aufgrund des Eigengewichts des Kühlaggregates sowie im Fahrbetrieb erhöhte Kräfte auf die Decklagen, da diese die Haltevorrichtungen überdecken. Es besteht dadurch eine erhöhte Gefahr des Ablösens der Decklagen von der Kernschicht. Des Weiteren ist die Montage der Kühlaggregate nur mit erhöhtem Aufwand realisierbar, da die Aggregate bei der Positionierung an den Montagestellen gleichzeitig angeordnet und befestigt werden müssen. Die Handhabung der Kühlaggregate bei der Montage ist dadurch erschwert.

Der Erfindung liegt daher die Aufgabe zu Grunde, eine Haltevorrichtung anzugeben, die eine schnelle und einfache Montage von Kühlaggregaten an einem Fahrzeugaufbau ermöglicht. Der Erfindung liegt die weitere Aufgabe zu Grunde, ein Isolierpaneel mit einer solchen Haltevorrichtung anzugeben, das eine erhöhte Langlebigkeit aufweist. Des Weiteren liegt der Erfindung die Aufgabe zu Grunde, einen Fahrzeugaufbau, insbesondere einen Kühlfahrzeugaufbau, sowie die Verwendung einer Haltevorrichtung anzugeben.

Erfindungsgemäß wird die vorgenannte Aufgabe im Hinblick auf die Halteeinrichtung durch den Gegenstand der Anspruchs 1 gelöst. Hinsichtlich des Isolierpaneels wird die vorgenannte Aufgabe durch den Gegenstand des Anspruchs 12 gelöst. Hinsichtlich des Fahrzeugaufbaus sowie der Verwendung wird die vorstehend genannte Aufgabe jeweils durch den Gegenstand des Anspruchs 14 (Fahrzeugaufbau) und des Anspruchs 15 (Verwendung) gelöst.

Konkret wird die Aufgabe durch eine Haltevorrichtung für ein Kühlaggregat eines Fahrzeugaufbaus, die wenigstens zwei parallel verlaufende Profilschienen aufweist, die auf einer gemeinsamen Ebene angeordnet und voneinander beabstandet sind, wobei die Profilschienen jeweils wenigstens einen Kanal und wenigstens ein Anlageelement für das Kühlaggregat aufweisen, das an dem Kanal angeordnet ist, wobei das Anlageelement wenigstens eine in den Kanal mündende Öffnung mit einem Durchtrittsbereich und einem Fixierbereich für ein Haltemittel des Kühlaggregats aufweist. Die Öffnung ist schlüssellochförmig ausgebildet.

Durch die schlüssellochförmigen Öffnungen, die in den jeweils zugehörigen Kanal führen, ist die Montage eines Kühlaggregates an den beiden Profilschienen vereinfacht. Die Öffnungen ermöglichen jeweils das Eindringen eines Haltemittels des Kühlaggregates in den jeweiligen Kanal sowie das Fixieren bzw. Halten des Haltemittels. Das Eindringen erfolgt durch den Durchtrittsbereich und das Fixieren bzw. Halten durch den Fixierbereich der Öffnungen.

Gemäß einer ersten Montageabfolge können die Haltemittel vor der Montage des Kühlaggregates an den Profilschienen vorpositioniert werden. Dies erfolgt bspw. durch Einhängen der Haltemittel in die Öffnungen der Profilschienen. Anschließend wird das Kühlaggregat an den Haltemitteln angeordnet und mit diesen an den Profilschienen befestigt. Gemäß einer zweiten Montageabfolge können die Haltemittel an dem Kühlaggregat vorpositioniert und anschließend zusammen mit dem Kühlaggregat an den Profilschienen angeordnet werden. Dabei dringen die Haltemittel durch den Durchtrittsbereich der zugehörigen Öffnung in den Kanal ein, sodass das Kühlaggregat an den Profilschienen durch den Fixierbereich der Öffnungen gehalten bzw. fixiert wird. Das Anordnen des Kühlaggregates an den Profilschienen kann bspw. durch Einhängen der Haltemittel in die Öffnungen der Profilschienen. Danach wird das Kühlaggregat an den Profilschienen befestigt. Dies entspricht dem Endmontagezustand.

Die erfindungsgemäße Haltevorrichtung ermöglicht somit die Montageschritte zur Befestigung des Kühlaggregates an den Profilschienen zeitlich voneinander zu trennen. D.h., das Kühlaggregat wird über die Haltemittel zuerst in die Öffnungen der Profilschienen eingehängt und anschließend an den Profilschienen endmontiert. Die Endmontage erfolgt vorzugsweise über die Haltemittel durch Anpressen des Kühlaggregates, insbesondere mittels Schraubverbindung, an die Profilschienen. Ein von der Haltevorrichtung entkoppeltes Ausrichten und Halten des Kühlaggregates zur Vorpositionierung und ein gleichzeitiges Befestigen, wie es bspw. bei der Montage des Kühlaggregates gemäß der EP 3 257 705 A1 erforderlich ist, entfällt dadurch. Durch die erfindungsgemäß Haltevorrichtung ist somit die Handhabung des Kühlaggregates und somit die Montage erheblich vereinfacht.

Bevorzugt ist das Haltemittel zylindrisch ausgebildet. Das Haltemittel weist vorzugsweise einen Kopfbereich auf, der zumindest eine Abflachung umfasst. Das Haltemittel ist vorzugsweise ein Bolzen, insbesondere ein Schraubenbolzen. Besonders bevorzugt ist das Haltemittel eine Befestigungsschraube. Die Befestigungsschraube kann eine Außensechskantschraube sein. Das Haltemittel kann zusätzlich oder alternativ wenigstens einen hakenförmigen Abschnitt aufweisen, um das Kühlaggregat in die Öffnungen einzuhängen. Andere Ausgestaltungen des Haltemittels sind möglich.

Die beiden Profilschienen weisen jeweils eine Längserstreckung auf und umfassen daher eine Schienenlängsrichtung. In Einbaulage verlaufen die Profilsschienen vorzugsweise vertikal. Alternativ ist eine querverlaufende Einbaulage der Profilschienen möglich. Die Profilschienen weisen einen Abstand voneinander auf. Mit anderen Worten ist ein Freibereich zwischen den beiden Profilschienen vorgesehen. Die Profilschienen sind auf einer gemeinsamen Ebene parallel angeordnet. Die gemeinsame Ebene liegt vorzugsweise auf einer Oberfläche eines Wandpaneels eines Fahrzeugaufbaus, insbesondere eines Kühlfahrzeugaufbaus. Bevorzugt ist das Wandpaneel thermisch isoliert. Das Wandpaneel ist vorzugsweise eine Stirnwand eines Fahrzeugaufbaus. Alternativ kann das Wandpaneel eine Seitenwand sein. Weiter alternativ kann das Wandpaneel eine Decke eines Fahrzeugaufbaus sein.

Die Profilschienen umfassen jeweils den Kanal und das Anlageelement mit der wenigstens einen schlüssellochförmigen Öffnung. Der Kanal ist durch die Öffnung nach außen offen ausgebildet. Der Kanal kann über die gesamte Länge der Profilschienen ausgebildet sein. Alternativ kann der Kanal über die Länge der Profilschienen abschnittsweise, d.h. aus mehreren voneinander getrennten Kanalabschnitten gebildet sein. Der Kanal und das Anlageelement bilden bevorzugt ein einziges Bauteil. Mit anderen Worten sind die Profilschienen vorzugsweise monolithisch ausgebildet. Das Anlageelement ist bevorzugt flächig ausgebildet. Das Anlageelement ist auf dem Kanal angeordnet. Das Anlageelement erstreckt sich bevorzugt über die gesamte Länge der Profilschiene. Es ist möglich, dass sich das Anlageelement über die Länge der Profilschiene zumindest teilweise erstreckt. Das Anlageelement dient zur Anlage des Kühlaggregates. Zusätzlich dient das Anlageelement zur Anlage an einer Oberfläche bspw. eines Wandpaneels eines Fahrzeugaufbaus, insbesondere Kühlfahrzeugaufbaus.

Die schlüssellochförmige Öffnung weist einen Durchtrittsbereich und einen Fixierbereich auf. Der Durchtrittsbereich dient dazu, bei der Montage das Haltemittel von außen in den Kanal zu führen. Der Fixierbereich dient zum Fixieren, d.h., zum Halten des Haltemittels, an der jeweiligen Profilschiene, um das Kühlaggregat anschließend an den Profilschienen zu befestigen.

Der Durchtrittsbereich und der Fixierbereich weisen vorzugsweise verschiedene Formen des Öffnungsquerschnitts auf. Der Durchtrittsbereich und/oder der Fixierbereich der Öffnung können zylindrisch ausgebildet sein. Zusätzlich oder alternativ können der Durchtrittsbereich und/oder der Fixierbereich der Öffnung quaderförmig sein. Der Durchtrittsbereich und/oder der Fixierbereich der Öffnung können zusätzlich oder alternativ langlochartig sein. Andere Formen sind möglich.

Bei einer bevorzugten Ausführungsform umfasst der Fixierbereich in Bezug auf den Durchtrittsbereich eine Öffnungsverengung zum Fixieren des Haltemittels. Mit anderen Worten umfasst der Durchtrittsbereich der schlüssellochförmigen Öffnung bevorzugt einen Öffnungsquerschnitt, der größer als ein Öffnungsquerschnitt des Fixierbereichs ist. Hier ist vorteilhaft, dass das Haltemittel bspw. bei der Ausbildung als Bolzen durch den Durchtrittsbereich in den Kanal geführt und durch die Öffnungsverengung an dem Anlageelement innenseitig fixiert bzw. gehalten wird. Dies erleichtert die Montage des Kühlaggregates.

Die Öffnung kann in dem Fixierbereich spitz zulaufen. Bevorzugt weist die Öffnung im Fixierbereich eine kleinere Öffnungsbreite als im Durchtrittsbereich auf. Die Öffnung ist im Durchtrittsbereich vorzugsweise zylindrisch und im Fixierbereich langlochartig.

Bei einer weiteren bevorzugten Ausführungsform geht der Durchtrittsbereich in Schienenlängsrichtung in den Fixierbereich derart über, dass in Einbaulage der Profilschienen das Haltemittel formschlüssig gehalten ist. Mit anderen Worten greift das Haltemittel im montierten Zustand in den Fixierbereich formschlüssig ein. In einer vertikalen Einbaulage der Profilschienen wird bei der Montage der Haltemittel bzw. des Kühlaggregates das jeweilige Haltemittel durch den Durchtrittsbereich in den Kanal eingeführt und anschließend nach unten bewegt. Das nach unten Bewegen kann durch Schwerkraft und/oder manuell, insbesondere per Hand, erfolgen. Es ist möglich, dass die Arretierung des Haltemittels durch Schwerkraft selbständig erfolgt. Der Fixierbereich umfasst vorzugsweise einen unteren Anschlag der Öffnung, an dem das Haltemittel im montierten Zustand aufliegt. Bei dieser Ausführungsform ist von Vorteil, dass das Haltemittel durch die Öffnung des Anlageelements bei der Montage sicher gehalten wird. Das Haltemittel ist bevorzugt durch die Öffnung in die Profilschiene eingehängt.

Bei einer weiteren bevorzugten Ausführungsform weist der Kanal wenigstens eine Formschlusskontur auf, die eine Verdrehsicherung für das Haltemittel bildet. Mit anderen Worten umfasst der Kanal einen Bereich mit einer Kontur, die das Haltemittel im montierten Zustand rotatorisch festlegt. Dies hat den Vorteil, dass das Haltemittel bei der Befestigung des Kühlaggregates in seiner Position, d.h. im Fixierbereich der Öffnung angeordnet, verdrehfest ist. Insbesondere bei der Ausbildung des Haltemittels als Befestigungsschraube wird beim Verschrauben des Kühlaggregates das Durchdrehen der Befestigungsschraube verhindert.

Bevorzugt weist der Kanal wenigstens einen erweiterten Abschnitt auf, der zumindest an den Durchtrittsbereich der Öffnung angrenzt und sich davon ausgehend zu der Formschlusskontur hin verjüngt. Mit anderen Worten umfasst der Kanal einen erweiterten Abschnitt, der zwischen der Formschlusskontur und zumindest der Öffnung angeordnet ist. Dies hat den Vorteil, dass bei der Montage das Hinführen des Haltemittels zu der Formschlusskontur des Kanals vereinfacht wird. Das Haltemittel kann dadurch schnell und einfach in eine Eingriffsposition mit der Formschlusskontur gebracht werden.

Vorzugsweise weist der erweiterte Abschnitt des Kanals im Querschnitt eine Breite auf, die zumindest einer maximalen Breite des Durchtrittsbereichs der Öffnung entspricht. Der erweiterte Abschnitt des Kanals weist bevorzugt direkt an der Öffnung die maximale Breite des Durchtrittsbereichs auf. Hier ist vorteilhaft, dass das Haltemittel ohne Störkanten oder Engstellen durch den Durchtrittsbereich in den Kanal eingeführt werden kann. Es ist möglich, dass der erweiterte Abschnitt des Kanals eine Breite aufweist, die größer als die maximale Breite des Durchtrittsbereichs ist. Die genannten Breiten beziehen sich auf den Querschnitt durch die Profilschiene an der breitesten Stelle der Öffnung.

Bei einer bevorzugten Ausführungsform weist der Kanal außenseitig wenigstens eine in Schienenlängsrichtung verlaufende Nut, insbesondere Klebenut, auf. Mit anderen Worten umfasst der Kanal eine Außenseite mit einer längsverlaufenden Nut. Dies hat den Vorteil, dass die Nut einen Aufnahmeraum für Klebstoff zur Verfügung stellt, um die Profilschiene in eine Ausnehmung bspw. eines Wandpaneels eines Fahrzeugaufbaus zu kleben. Die Nut kann über die gesamte Länge der entsprechenden Profilschiene ausgebildet sein. Alternativ oder zusätzlich kann die Nut abschnittsweise in Schienenlängsrichtung ausgebildet sein. Es ist möglich, dass der Kanal mehrere außenseitig ausgebildete Nuten aufweist.

Vorzugsweise ist der Kanal in die Profilschienen integriert und quer zur Schienenlängsrichtung, insbesondere ausschließlich, durch die Öffnung zugänglich. Mit anderen Worten ist der Kanal integral ausgebildet. Der Kanal kann quer zur Schienenlängsrichtung vollständig geschlossen sein. Der Kanal ist durch das Anlageelement stirnseitig abgedeckt. Der Kanal umfasst eine Wandung, die den Innenraum des Kanals umgibt. Die Profilschienen weisen vorteilhaft eine kompakte und stabile Bauform auf.

Das Anlageelement weist vorzugsweise wenigstens eine Anpressfläche für das Haltemittel auf, die dem Kanal zugewandt ist und zumindest an den Fixierbereich der Öffnung angrenzt. Die Anpressfläche an dem Anlageelement innenseitig angeordnet. Der Fixierbereich ist vorzugsweise von der Anpressfläche zumindest teilweise umgeben. Im befestigte Zustand des Kühlaggregates ist das Haltemittel an die Anpressfläche des Anlageelements angepresst.

Bei einer bevorzugten Ausführungsform umfasst das Anlageelement wenigstens einen Schenkel, der entlang der Schienenlängsrichtung über den Kanal seitlich vorsteht. Der wenigstens eine Schenkel bildet eine Auflage der Profilschienen bspw. zur Befestigung an einem Wandpaneel eines Fahrzeugaufbaus. Dadurch werden im befestigten Zustand des Kühlaggregates Kräfte verbessert abgeleitet. Bevorzugt weist das Anlageelement wenigstens zwei Schenkel auf, die in Schienenlängsrichtung über den Kanal in entgegengesetzter Richtung vorstehen.

Zusätzlich oder alternativ weist das Anlageelement kanalseitig wenigstens eine Ausnehmung, insbesondere eine weitere Klebenut, auf. Die Ausnehmung ist vorzugsweise in dem Schenkel ausgebildet. Die Ausnehmung kann vollständig an dem Schenkel ausgebildet sein. Alternativ kann die Ausnehmung in eine Wandung des Kanals übergehen. Die Ausnehmung kann eine Nut sein, die in dem Anlagenelement, insbesondere dem Schenkel, ausgebildet ist. Bei dieser Ausführungsform ist von Vorteil, dass das die Ausnehmung einen weiteren Aufnahmeraum für Klebstoff zur Verfügung stellt, um die Profilschiene in eine Ausnehmung bspw. eines Wandpaneels eines Fahrzeugaufbaus zu kleben.

Bevorzugt sind die Öffnungen der beiden Profilschienen auf derselben Höhe angeordnet. Besonders bevorzugt weisen die Profilschienen jeweils mehrere in Schienenlängsrichtung verteilte Öffnungen auf, wobei jeweils zwei Öffnungen der beiden Profilschienen auf derselben Höhe angeordnet sind. Dies ermöglicht die Montage von Kühlaggregaten mit unterschiedlichen Größen.

Alternativ ist es möglich, dass die Öffnungen der beiden Profilschienen auf einer unterschiedlichen Höhe angeordnet sind. Mit anderen Worten können die Öffnungen der beiden Profilschienen in deren Höhenlage voneinander versetzt sein. Dies kann für die Montage von Kühlaggregaten älteren Baujahres von Vorteil sein, da diese oftmals asymmetrische Befestigungspunkte umfassen.

Die Haltevorrichtung weist bei einer bevorzugten Ausführungsform wenigstens einen Quersteg auf, der sich zwischen den beiden Profilschienen erstreckt, wobei die Profilschienen und der wenigstens eine Quersteg einen Rahmen bilden. Der Quersteg kann die beiden Profilschienen quer zur Schienenlängsrichtung verbinden. Dies hat den Vorteil, dass die Steifigkeit sowie Stabilität der Haltevorrichtung erhöht ist. Zusätzlich oder alternativ kann der Quersteg eine Auflage für das Kühlaggregat zwischen den beiden Profilschienen bilden. Der Quersteg kann alternativ von den beiden Profilschienen beabstandet sein. Vorzugsweise ist der Quersteg als längliches Flachmaterial ausgebildet, das mit einer Oberfläche der Profilschienen fluchtet.

Vorzugsweise sind zwei Querstege vorgesehen, die sich zwischen den beiden Profilschienen erstrecken und voneinander beabstandet sind. Die Profilschienen und die Querstege begrenzen somit ein dazwischenliegendes Durchgangsfenster zur Kühlluftdurchführung.

Weiter vorzugsweise sind die Profilschienen und/oder die Querstege aus Aluminium gebildet. Die Haltevorrichtung weist dadurch ein geringes Gewicht auf.

Nach einem nebengeordneten Aspekt betrifft die Erfindung ein Isolierpaneel mit wenigstens einer erfindungsgemäßen Haltevorrichtung, wobei das Isolierpaneel eine thermisch isolierende Kernschicht aufweist und eine die Kernschicht überziehende Deckschicht aus faserverstärktem, insbesondere glasfaserverstärktem, Kunststoffmaterial, wobei die Kernschicht wenigstens zwei Ausnehmungen aufweist, in denen jeweils eine der Profilschienen angeordnet ist, wobei die Deckschicht zwischen den Profilschienen und der Kernschicht angeordnet ist. Das Isolierpaneel ist somit in Sandwichbauweise ausgebildet. Das Isolierpaneel ist vorzugsweise eine Stirnwand eines Fahrzeugaufbaus. Das Isolierpaneel kann auch als Seitenwand oder Decke eines Fahrzeugsaufbaus zum Einsatz kommen.

Bei einer bevorzugten Ausführungsform sitzen die Profilschienen jeweils mit dem Kanal in die zugehörige Ausnehmung ein, wobei das jeweilige Anlageelement an einer Stirnseite des Isolierpaneels zumindest teilweise anliegt. Bevorzugt liegt das Anlageelement mit wenigstens einem Schenkel an der Stirnseite des Isolierpaneels an.

Die Profilschienen sind bevorzugt mit der Deckschicht stoffschlüssig verbunden. Besonders bevorzugt sind die Profilschienen mit der Deckschicht verklebt. Um eine feste und sichere Verbindung bereitzustellen, ist die Profilschiene mit der Deckschicht in der Ausnehmung verklebt und/oder außerhalb der Ausnehmung mit der Deckschicht das Anlageelement verklebt.

Nach einem weiteren nebengeordneten Aspekt betrifft die Erfindung einen Fahrzeugaufbau, insbesondere eines Kühlfahrzeugs, mit wenigstens einer erfindungsgemäßen Haltevorrichtung und/oder mit wenigstens einem Isolierpaneel der vorstehend genannten Art. Der Fahrzeugaufbau ist bevorzugt ein thermisch isolierter Kofferaufbau.

Bei der Verwendung einer erfindungsgemäßen Haltevorrichtung wird wenigstens ein Feuerlöscher und/oder wenigstens eine Dokumentenhalteeinrichtung, insbesondere eine Dokumentenrolle, und/oder wenigstens ein weiteres Aggregat und/oder wenigstens ein Hilfsmittel, insbesondere ein Besen oder dergleichen, an der Haltevorrichtung befestigt und/oder gehalten. Die erfindungsgemäße Haltevorrichtung dient also nicht nur für die Befestigung eines Kühlaggregates, sondern auch zur Halterung von weiteren Komponenten sowie Hilfsmitteln.

Zu den Vorteilen des Fahrzeugaufbaus sowie der Verwendung wird auf die im Zusammenhang mit der Haltevorrichtung sowie mit dem Isolierpaneel erläuterten Vorteile verwiesen. Darüber hinaus kann der Fahrzeugaufbau alternativ oder zusätzlich einzelne oder eine Kombination mehrerer zuvor in Bezug auf die Haltevorrichtung genannte Merkmale aufweisen.

Die Erfindung wird nachstehend mit weiteren Einzelheiten unter Bezug auf die beigefügten Zeichnungen näher erläutert. Die dargestellten Ausführungsformen stellen Beispiele dar, wie die erfindungsgemäße Haltevorrichtung ausgestaltet sein können.

In diesen zeigen,
- Fig. 1: eine perspektivische Darstellung eines Fahrzeugaufbaus mit einer Haltevorrichtung nach einem bevorzugten erfindungsgemäßen Ausführungsbeispiel;
- Fig. 2: einen Detailausschnitt im Bereich zweier schlüssellochförmiger Öffnungen einer Profilschiene der Haltevorrichtung nach Fig. 1;
- Fig. 3: einen Querschnitt der Haltevorrichtung nach Fig. 1 im Bereich einer schlüssellochförmigen Öffnung einer Profilschiene der Haltevorrichtung; und
- Fig. 4: einen Teilquerschnitt durch eine Stirnwand des Fahrzeugaufbaus nach Fig. 1.

Im Folgenden werden für gleiche oder gleichwirkende Teile dieselben Bezugsziffern verwendet.

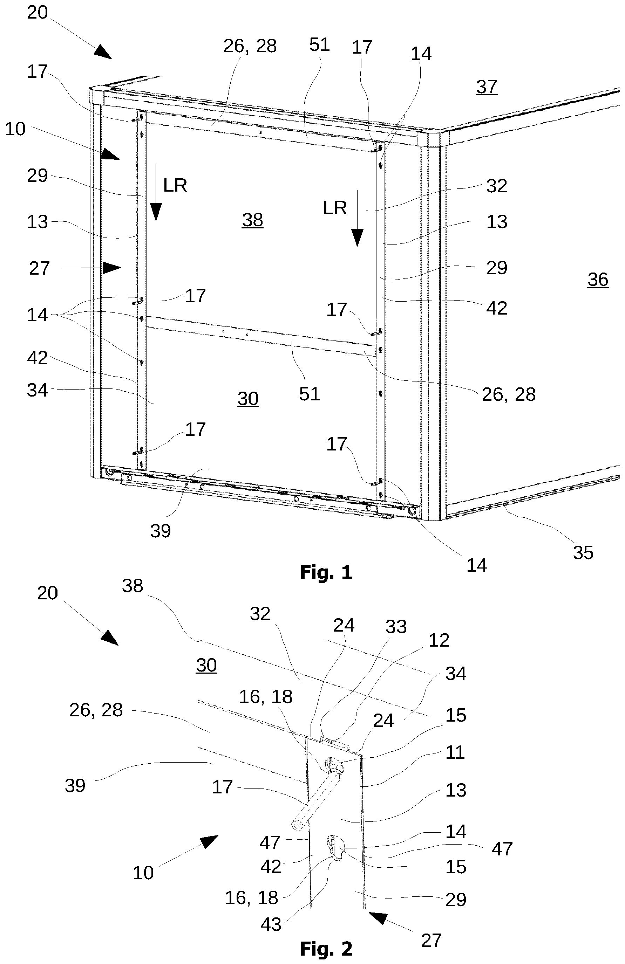

Fig. 1 zeigt einen Fahrzeugaufbau 20 mit einer Haltevorrichtung 10 nach einem bevorzugten erfindungsgemäßen Ausführungsbeispiel. Bei dem Fahrzeugaufbau 10 handelt es sich jeweils um einen thermisch isolierten Kofferaufbau. Bevorzugt kommt der Fahrzeugaufbau 10 als Kühlfahrzeugaufbau zum Einsatz, um gekühlte sowie tiefgekühlte Güter und Waren zu transportieren. Der Fahrzeugaufbau 10 ist des Weiteren zum Transport von feuchtigkeitsempfindlichen Gütern, d.h. zum Trockentransport von Gütern geeignet. Weitere Anwendungsfälle für den Fahrzeugaufbau 10 sind möglich.

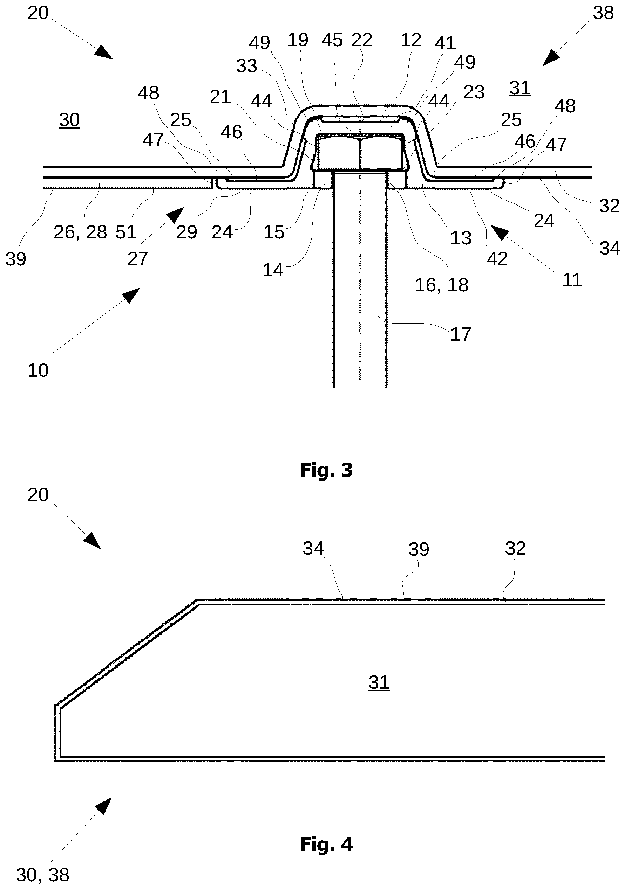

Wie aus Fig. 1 hervorgeht, umfasst der Fahrzeugaufbau 20 einen Boden 35, zwei gegenüber angeordnete Seitenwände 36, ein Dach 37 und eine nicht dargestellte Heckwand auf, die vorzugsweise ein Ladeportal umfasst. Stirnseitig weist der Fahrzeugaufbau 20 eine Stirnwand 38 auf. Die Stirnwand 38 ist als Isolierpaneel ausgebildet. Wie in Fig. 4 gut erkennbar, weist die Stirnwand 38 eine thermisch isolierende Kernschicht 31, bevorzugt aus einem geschäumten Kunststoffmaterial auf. Die Kernschicht 31 ist mit einer faserverstärkten, insbesondere glasfaserverstärkten, Deckschicht 32 ummantelt. Die Stirnwand 38 ist in Sandwichbauweise ausgebildet, da die Kernschicht 31 zwischen der Deckschicht 32 angeordnet ist und diese an beiden großflächigen Seiten überzieht. Die Seitenwände 36 und das Dach 37 sind ebenfalls als Isolierpaneel, wie vorstehend beschrieben, ausgestaltet. Der Boden 35 und die Heckwand können ebenfalls als Isolierpaneel, wie vorstehend beschrieben, ausgestaltet sein. Die Stirnwand 38 ist zusätzlich an dessen vertikalen Enden nach hinten abgeschrägt.

Die Haltevorrichtung 10 ist, wie in Fig. 1 gezeigt, an der Stirnwand 38 des Fahrzeugaufbaus 20 angeordnet. Auf die Lage und Befestigung der Haltevorrichtung 10 an der Stirnwand 38 wird später näher eingegangen.

Die Haltevorrichtung 10 dient zum Halten und Befestigen eines Kühlaggregates zur Kühlung eines Laderaums des Fahrzeugaufbaus 20. Die Haltevorrichtung 10 weist zwei parallel verlaufende Profilschienen 11 auf, die auf einer gemeinsamen Ebene liegen und voneinander auf der gemeinsamen Ebene beabstandet sind. Die beiden Profilschienen 11 sind identisch. Die gemeinsame Ebene liegt auf einer außenliegenden Oberfläche 39 der Stirnwand 38. Die außenliegende Oberfläche 39 der Stirnwand 38 ist von dem Laderaum des Fahrzeugaufbaus 20 abgewandt. Wie in Fig. 1 gezeigt, sind die beiden Profilschienen 11 vertikal verlaufend angeordnet.

Die Profilschienen 11 weisen jeweils einen Kanal 12 und ein Anlageelement 13 auf, das auf dem Kanal 12 angeordnet ist, auf die später näher eingegangen wird. Die Profilschienen 11 sind als einteilig ausgebildet. Mit anderen Worten bilden der Kanal 12 und das Anlageelement 13 der Profilschienen 11 ein einzelnes Bauteil. Oder anders gesagt, sind der Kanal 12 und das Anlageelement 13 integral ausgebildet. Die Profilschienen 11 sind Zuschnitte einer Endlos-Profilschiene. Die Profilschienen 11 sind also günstig in der Herstellung. Die Profilschienen 11 erstrecken sich in einer Schienenlängsrichtung LR (siehe Fig. 1). Die Profilschienen 11 sind aus Aluminium gebildet.

Der Kanal 12 und das Anlageelement 13 erstrecken sich über die gesamte Länge der Profilschienen 11. Der Kanal 12 ist in die jeweilige Profilschiene 11 integriert.

Das Anlageelement 13 deckt den Kanal 13 nach außen ab. Der Kanal 12 umfasst eine Wandung 41, die in das Anlageelement 13 übergeht. Das Anlageelement 13 weist zwei Schenkel 24 auf, wobei jeweils einer der Schenkel 24 entlang einer Längsseite des Kanals 12 ausgebildet ist. Die Schenkel 24 stehen in entgegengesetzter Richtung über den Kanal 12 vor, wie in Fig. 3 gut erkennbar ist. Mit anderen Worten bilden die Schenkel 24 jeweils einen Vorsprung an einer der Längsseiten des Kanals 12. Das Anlageelement 13 ist also derart auf dem Kanal 12 angeordnet, dass die Schenkel 24 in Schienenlängsrichtung LR entlang des Kanals 12 seitlich vorstehen. Auf die Schenkel 24 wird später näher eingegangen.

Das Anlageelement 13 bildet einen flächigen Abschnitt der Profilschienen 11. Der flächige Abschnitt erstreckt sich dabei in Schienenlängsrichtung LR. Mit anderen Worten ist das Anlageelement 13 länglich ausgebildet. Das Anlageelement 13 weist eine Anlagefläche 42 zur Anlage des Kühlaggregates auf. Die Anlagefläche 42 kann zusätzlich eine Dichtfläche sein, um das Kühlaggregat im montierten Zustand zu der Profilschiene 11 hin abzudichten.

Das Anlageelement 13 weist mehrere schlüssellochförmige Öffnungen 14 auf, die quer zur Schienenlängsrichtung LR in den Kanal 12 münden. Mit anderen Worten sind in dem Anlageelement 13 mehrere schlüssellochförmige Öffnungen 14 ausgebildet, durch die der Kanal 12 nach außen offen ist. Dies ist in Fig. 1 gut erkennbar. Die Öffnungen 14 sind quer zur Schienenlängsrichtung LR zwischen den beiden Schenkeln 24 ausgebildet. Die Öffnungen 14 sind in Schienenlängsrichtung LR in dem Anlageelement 13 verteilt angeordnet. Mit anderen Worten sind die Öffnungen 14 entlang der Profilschienen 11 untereinander und voneinander beabstandet angeordnet. Aus Fig. 1 geht ebenfalls hervor, dass jeweils zwei der schlüssellochförmigen Öffnungen 14 der Profilschienen 11 auf derselben Höhe ausgebildet sind. Mit anderen Worten ist jeweils eine der Öffnungen 14 der einen Profilschiene 11 auf der Höhe jeweils einer der Öffnungen 14 der anderen Profilschiene 11 angeordnet. Diese beiden auf einer Höhe liegenden Öffnungen 14 bilden ein Öffnungspaar. Konkret umfasst die Haltevorrichtungen 10 mehrere Öffnungspaare auf unterschiedlichen Höhen, sodass an der Haltevorrichtung 10 Kühlaggregate unterschiedlicher Größen befestigt werden können.

Die schlüssellochförmigen Öffnungen 14 weisen jeweils einen Durchtrittsbereich 15 und einen Fixierbereich 16 zum Einführen und Fixieren eines Haltemittels 17 zur Befestigung des Kühlaggregates auf. Der Durchtrittsbereich 15 der Öffnung 14 umfasst einen Öffnungsquerschnitt, der größer als ein Öffnungsquerschnitt des Fixierbereichs 16 ist. Konkret weisen die Öffnungsquerschnitte des Durchtrittsbereichs 15 und des Fixierbereichs 16 quer zur Schienenlängsrichtung LR unterschiedliche maximale Breiten auf.

Konkreter weist der Öffnungsquerschnitt des Durchtrittsbereichs 15 quer zur Schienenlängsrichtung LR eine maximale Breite auf, die größer als eine maximale Breite des Öffnungsquerschnitts des Fixierbereichs 16 quer zur Schienenlängsrichtung LR ist. Oder anders gesagt, weist der Öffnungsquerschnitt des Fixierbereichs 16 quer zur Schienenlängsrichtung LR eine maximale Breite auf, die kleiner als eine maximale Breite des Öffnungsquerschnitts des Durchtrittsbereichs 15 quer zur Schienenlängsrichtung LR ist. Der Fixierbereich 16 weist somit in Bezug auf den Durchtrittsbereich 15 eine Öffnungsverengung 18 auf.

Wie in Fig. 2 gut erkennbar, weist der Durchtrittsbereich 15 einen kreisförmigen Öffnungsquerschnitt und der Fixierbereich 16 einen langlochförmigen Öffnungsquerschnitt auf. Die Öffnungsquerschnitte des Durchtrittsbereich 15 und des Fixierbereich 16 gehen fließend ineinander über. Die jeweilige Öffnung 14 ist stehend ausgebildet. Der Fixierbereich 16 liegt in Schienenlängsrichtung LR unter dem Durchtrittsbereich 15, sodass das Haltemittel 17 beim Montieren durch den Fixierbereich 16 formschlüssig gehalten wird. Der Fixierbereich 16 umfasst einen unteren Anschlag 43 zur Auflage des Haltemittels 17 im vormontierten sowie endmontierten Zustand.

In Fig. 2 sind exemplarisch zwei der mehreren Öffnungen 14 dargestellt, wobei in der oberen Öffnung 14 das Haltemittel 17 angeordnet ist und die darunterliegende Öffnung 14 frei ist. Das Haltemittel 17 ist ein Bolzen mit einem seitlich abgeflachten Bolzenkopf und einem nicht dargestellten Gewindeabschnitt zur Befestigung des Kühlaggregates. Konkret ist das Haltemittel 17 eine Befestigungsschraube mit einem Außensechskantkopf. Im Folgenden wird das Haltemittel 17 allgemein als Befestigungsschraube 17 bezeichnet.

Der Kanal 12 der Profilschienen 11 weist zumindest auf der Höhe der Öffnungen 14 eine Formschlusskontur 19 auf. Die Formschlusskontur 19 ist innenseitig, d.h. einem Kanalinnenraum zugewandt, angeordnet. Die Wandung 41 des Kanals 12 schließt den Kanalinnenraum zumindest teilweise ein. Mit anderen Worten ist die Formschlusskontur 19 dem Anlageelement 13 zugewandt. Die Formschlusskontur 19 umfasst zwei in Schienenlängsrichtung LR verlaufende Seitenwände 44 und einen Kanalboden 45, der an die Seitenwände 44 angrenzt. Der Kanalboden 45 ist parallel zu einer dem Kanalinnenraum zugewandten Innenseite des Anlageelements 13 angeordnet.

Die Seitenwände 44 und der Kanalboden 45 bilden im Querschnitt eine U-förmige Kontur. Bei der Montage begrenzt der Kanalboden 45 die Befestigungsschraube 17 quer zur Schienenlängsrichtung LR. D.h., beim Einführen der Befestigungsschraube 17 durch den Durchtrittsbereich 15 einer der Öffnungen 14 schlägt die Befestigungsschraube 17 mit dem Außensechskantkopf stirnseitig am Kanalboden 45 an. In diesem Zustand liegt der Außensechskantkopf der Befestigungsschraube 17 mit jeweils einer Abflachung einer der beiden Seitenwände 44 gegenüber, sodass ein Verdrehen der Befestigungsschraube 17 verhindert ist. Der Außensechskantkopf bildet dabei mit den Seitenwänden 44 einen Formschluss. Die Formschlusskontur 19 bildet daher eine Verdrehsicherung für die Befestigungsschraube 17. Dies hat den Vorteil, dass ein Kühlaggregat an der Befestigungsschraube 17 angeordnet und über diese mit der jeweiligen Profilschiene 11 verschraubt werden kann, ohne dass die Befestigungsschraube 17 durchdreht. Durch Verschrauben wird das Kühlaggregat an die Anlagefläche 42 des Anlageelements 13 angepresst.

Der Anlagefläche 42 gegenüber angeordnet weist das Anlageelement 13 eine Anpressfläche 23 auf, die an die Öffnungen 14 angrenzt. Die Anpressfläche 23 ist dem Kanalinnenraum zugewandt. Mit anderen Worten ist die Anpressfläche 23 dem Kanalboden 45 zugewandt. Konkret umgibt die Anpressfläche 23 zumindest den Fixierbereich 16 der Öffnungen 14. Die Anpressfläche 23 dient zum Anpressen des Außensechskantkopfes der Befestigungsschraube 17 im endmontierten Zustand, d.h., im befestigten Zustand des Kühlaggregates.

An die Formschlusskontur 19 angrenzend ist eine erweiterter Abschnitt 21 des Kanals 12 ausgebildet. Mit anderen Worten weist der Kanal 12 an die Formschlusskontur 19 einen erweiterten Abschnitt 21 auf, der einen Innenquerschnitt des Kanals 12 zur jeweiligen Öffnung 14 hin vergrößert. Dies ist in Fig. 3 zu erkennen. Der erweiterte Abschnitt 21 des Kanals 12 ist zwischen der jeweiligen Öffnung 14 und der Formschlusskontur 19 ausgebildet, wobei sich der erweiterte Abschnitt 21 quer zur Schienenlängsrichtung LR ausgehend von der Öffnung 14 zu der Formschlusskontur 19 hin verjüngt. Konkret verjüngt sich der erweiterte Abschnitt 21 des Kanals 12 ausgehend von den Öffnungen 14 zu den Seitenwänden 44 der Formschlusskontur 19 hin. Der erweiterte Abschnitt 21 des Kanals 12 weist im Querschnitt an der jeweiligen Öffnung 14 eine Breite auf, die der maximalen Breite des Durchtrittsbereichs 15 der Öffnungen 14 entspricht.

In Fig. 3 ist gezeigt, dass der Kanal 12 sowie das Anlageelement 13 Ausnehmungen 22, 25 aufweisen, um zur Montage an der Stirnwand 38 des Fahrzeugaufbaus 20 Klebstoff einzubringen. Konkret weist der Kanal 13 in seiner Wandung 41 eine in Schienenlängsrichtung LR verlaufende Nut 22 auf. Die Nut 22 bildet eine erste Klebenut. Des Weiteren weisen die beiden Schenkel 24 an dem Kanal 12 zugewandten Innenseiten 46 jeweils eine weitere Nut 25 auf. Die weitere Nut 25 ist in Schienenlängsrichtung LR verlaufend ausgebildet. Die weitere Nut 25 bildet eine zweite Klebenut. Die weiteren Nut 25 des jeweiligen Schenkels 24 geht in die Wandung 41 des Kanals 12 über. Mit anderen Worten ist die weitere Nut 25 teilweise in der Wandung 41 des Kanals 12 und teilweise in dem Schenkel 24 ausgebildet.

Ferner zeigt Fig. 3, dass die Schenkel 24 an deren in Schienenlängsrichtung LR verlaufenden Längsenden 47 jeweils einen ersten Vorsprung 48 aufweisen, der an der Innenseite 46 abstehend ausgebildet ist. Der erste Vorsprung 48 begrenzt die weitere Nut 25, insbesondere die zweite Klebenut, außenseitig. Ferner dient der erste Vorsprung 48 zur Anlage an der Oberfläche 39 der Stirnwand 38. Der Kanal 12 weist zwei zweite Vorsprünge 49 auf, die die Nuten 22, 25 begrenzen. Die beiden Vorsprünge 49 sind von der Wandung 41 des Kanals 12 abstehend ausgebildet. Die beiden Vorsprünge 49 bilden Längskanten des Kanals 12, die in Schienenlängsrichtung LR verlaufen. Die Vorsprünge 48, 49 bilden Abstandhalter zu der Deckschicht 32 der Stirnwand 38 und definieren eine Klebenuttiefe.

Wie vorstehend beschrieben, ist die Haltevorrichtung 10 an der Stirnwand 38 des Fahrzeugaufbaus 10 angeordnet. Konkret ist, wie in Fig. 1 gezeigt, die Haltevorrichtung 10 derart angeordnet, dass die Profilschienen 10 vertikal verlaufen. Zwischen den beiden Profilschienen 10 sind zwei Querstege 26 angeordnet, die auf der gemeinsamen Ebene liegen. Einer der Querstege 26 ist an einem ersten, insbesondere oberen Ende der Profilschienen 11 angeordnet. Der weitere Quersteg 26 ist entlang der Profilschienen 11 angeordnet. Die beide Querstege 26 sind jeweils aus einem Flachmaterial 28 gebildet. Die Querstege 26 sind mit der Anlagefläche 42 der Profilschienen 11 fluchtend. Mit andern Worten weisen die Querstege 26 eine Fläche 51 auf, die mit der Anlagefläche 42 der Anlageelemente 13 der Profilschienen 11 bündig abschließt. Die Fläche 51 dient zur Anlage des Kühlaggregates. Die Querstege 26 sind aus Aluminium gebildet.

Des Weiteren können die Querstege 26 zur Aussteifung der beiden Profilschienen 11 dienen. Die Querstege 26 können dazu mit den beiden Anlageelementen 13 der Profilschienen 11 verbunden, insbesondere verschweißt, sein. Auch ist denkbar, dass die Querstege 26, wie in Fig. 3 erkennbar, von den Profilschienen 11 beabstandet sind, d.h. zu diesen einen Spalt aufweisen. In diesem Fall können die Querstege 26 lediglich zur Anlage und/oder zur Abdichtung des Kühlaggregates dienen.

Die Querstege 26 sind derart voneinander vertikal beabstandet, dass diese mit den beiden Profilschienen 11 einen Rahmen bilden, an dem das Kühlaggregat befestigbar ist. Die Querstege 26 und die Profilschienen 12 begrenzen einen dazwischenliegenden Freibereich, der zur Kühlluftzirkulation, d.h. zum Ansaugen von zu kühlender Luft aus dem Laderaum und zum Rückführen von gekühlter Luft in den Laderaum dient.

Wie in den Fig. 2 und 3 ersichtlich ist, sind die Profilschienen 11 teilweise in Ausnehmungen 33 der Stirnwand 38 angeordnet. Konkret weist die Stirnwand 38 je Profilschiene 11 ein separate Ausnehmung 33 auf. Die Ausnehmungen 33 ist auf einer dem Laderaum abgewandten Außenseite der Stirnwand 38 vorgesehen. Die Ausnehmungen 33 sind länglich ausgebildet. Im Wesentlichen weisen die Ausnehmungen 33 eine Länge auf, die der Gesamtlänge der Profilschienen 11 entspricht. Die Ausnehmungen 33 sind zur Aufnahme des Kanals 12 der Profilschienen 11 ausgebildet. Konkret sitzen die Profilschienen 11 mit deren Kanal 12 in der zugehörigen Ausnehmung 33 ein.

Wie in Fig. 3 gut erkennbar, ist die jeweilige Ausnehmung 33 mit der Deckschicht 32 ausgekleidet. Mit anderen Worten überzieht die Deckschicht 32 die Kontur der Ausnehmungen 33 vollständig. Der jeweilige Kanal 12 der Profilschienen 11 ist in der zugehörigen Ausnehmung 33 angeordnet. Konkret liegt der Kanal 12 mit den beiden zweiten Vorsprüngen 49 in der Ausnehmung 33 an der Deckschicht 32 an. Um einen festen Halt der Profilschienen 11 zu erreichen, sind die Profilschienen 11 mit der Deckschicht 32 stoffschlüssig verbunden. Konkret sind die Profilschienen 11 mit der Deckschicht 32 verklebt. Dazu sind die Nuten 22, 25 ausgebildet, die einen Aufnahmereservoir für Klebstoff bilden. Zusätzlich sind die Schenkel 24 außerhalb der Ausnehmung 33 mit der Deckschicht 32 verklebt. Mit den beiden ersten Vorsprüngen 48 liegen die Schenkel 24 auf der Oberfläche 39 der Stirnwand 38 auf.

Im Folgenden wird die Montage eines Kühlaggregates an der Haltevorrichtung 10 beschrieben.

Nach einer ersten Montageabfolge können mehrere Befestigungsschrauben 17 vor der Montage des Kühlaggregates an den Profilschienen 11 vorpositioniert werden. Dies erfolgt durch Einhängen der Befestigungsschrauben 17 in die schlüssellochförmigen Öffnungen 14 der Profilschienen 11. Anschließend wird das Kühlaggregat an den Befestigungsschrauben 17 angeordnet und an diesen durch Verschrauben befestigt. Das Kühlaggregat wird an die Anlagefläche 42 der Anlageelemente 13 der Profilschienen 11 angepresst.

Nach einer zweiten Montageabfolge können die Befestigungsschrauben 17 an dem Kühlaggregat vorpositioniert und anschließend zusammen mit dem Kühlaggregat an den Profilschienen 11 angeordnet werden. Dabei dringen die Befestigungsschrauben 17 durch den Durchtrittsbereich 15 der zugehörigen Öffnung 14 in den Kanal 12 ein, sodass das Kühlaggregat an den Profilschienen 11 durch den Fixierbereich 16 der Öffnungen 14 gehalten bzw. fixiert wird. Mit anderen Worten erfolgt das Anordnen des Kühlaggregates an den Profilschienen 11 durch Einhängen der Befestigungsschrauben 17 in die Öffnungen 14 der Profilschienen 11. Danach wird das Kühlaggregat an den Profilschienen 11 durch Verschrauben festgezogen. Das Kühlaggregat wird an die Anlagefläche 42 der Anlageelemente 13 der Profilschienen 11 angepresst. Bei beiden Montageabfolgen ist es möglich, dass das Kühlaggregat zusätzlich an die Fläche 51 zumindest eines Querstegs 21 angepresst wird.

### Bezuaszeichenliste

- 10: Haltevorrichtung
- 11: Profilschienen
- 12: Kanal
- 13: Anlageelement
- 14: Öffnung
- 15: Durchtrittsbereich
- 16: Fixierbereich
- 17: Haltemittel
- 18: Öffnungsverengung
- 19: Formschlusskontur
- 20: Fahrzeugaufbau
- 21: erweiterter Abschnitt
- 22: Nut
- 23: Anpressfläche
- 24: Schenkel
- 25: Ausnehmung des Anlageelements
- 26: Quersteg
- 27: Rahmen
- 28: Flachmaterial
- 29: Oberfläche der Profilschienen
- 30: Isolierpaneel
- 31: Kernschicht
- 32: Deckschicht
- 33: Ausnehmungen der Kernschicht
- 34: Stirnseite des Isolierpaneels
- 35: Boden
- 36: Seitenwand
- 37: Dach
- 38: Stirnwand
- 39: Oberfläche der Stirnwand
- 41: Wandung
- 42: Anlagefläche des Anlageelements
- 43: unterer Anschlag
- 44: Seitenwände der Formschlusskontur
- 45: Kanalboden
- 46: Innenseite der Schenkel
- 47: Längsenden der Schenkel
- 48: erste Vorsprünge
- 49: zweite Vorsprünge
- 51: Fläche der Querstege
- LR: Schienenlängsrichtung

## Patentansprüche

1. Haltevorrichtung (10) für ein Kühlaggregat eines Fahrzeugaufbaus (20), die wenigstens zwei parallel verlaufende Profilschienen (11) aufweist, die auf einer gemeinsamen Ebene angeordnet und voneinander beabstandet sind, wobei die Profilschienen (11) jeweils wenigstens einen Kanal (12) und wenigstens ein Anlageelement (13) für das Kühlaggregat aufweisen, das an dem Kanal (12) angeordnet ist, wobei das Anlageelement (13) wenigstens eine in den Kanal (12) mündende Öffnung (14) mit einem Durchtrittsbereich (15) und einem Fixierbereich (16) für ein Haltemittel (17) des Kühlaggregats aufweist, wobei die Öffnung (14) schlüssellochförmig ist.

2. Haltevorrichtung (10) nach Anspruch 1,
**dadurch gekennzeichnet, dass**
der Fixierbereich (16) in Bezug auf den Durchtrittsbereich (15) eine Öffnungsverengung (18) zum Fixieren des Haltemittels (17) umfasst.

3. Haltevorrichtung (10) nach Anspruch 1 oder 2,
**dadurch gekennzeichnet, dass**
der Durchtrittsbereich (15) in Schienenlängsrichtung (LR) in den Fixierbereich (16) derart übergeht, dass in Einbaulage der Profilschienen (11) das Haltemittel (17) formschlüssig gehalten ist.

4. Haltevorrichtung (10) nach einem der vorhergehenden Ansprüche,
**dadurch gekennzeichnet, dass**
der Kanal (12) wenigstens eine Formschlusskontur (19) aufweist, die eine Verdrehsicherung für das Haltemittel (17) bildet.

5. Haltevorrichtung (10) nach einem der vorhergehenden Ansprüche, insbesondere nach Anspruch 4,
**dadurch gekennzeichnet, dass**
der Kanal (12) wenigstens einen erweiterten Abschnitt (21) aufweist, der zumindest an den Durchtrittsbereich (15) der Öffnung (14) angrenzt und sich davon ausgehend zu der/einer Formschlusskontur (19) hin verjüngt, wobei insbesondere der erweiterte Abschnitt (21) des Kanals (12) im Querschnitt eine Breite aufweist, die zumindest einer maximalen Breite des Durchtrittsbereichs (15) der Öffnung (14) entspricht.

6. Haltevorrichtung (10) nach einem der vorhergehenden Ansprüche,
**dadurch gekennzeichnet, dass**
der Kanal (12) außenseitig wenigstens eine in Schienenlängsrichtung (LR) verlaufende Nut (22), insbesondere Klebenut, aufweist und/oder der Kanal (12) in die Profilschienen (11) integriert ist und quer zur Schienenlängsrichtung (LR), insbesondere ausschließlich, durch die Öffnung (14) zugänglich ist.

7. Haltevorrichtung (10) nach einem der vorhergehenden Ansprüche,
**dadurch gekennzeichnet, dass**
das Anlageelement (13) wenigstens eine Anpressfläche (23) für das Haltemittel (17) aufweist, die dem Kanal (12) zugewandt ist und zumindest an den Fixierbereich (16) der Öffnung (14) angrenzt und/oder das Anlageelement (13) wenigstens einen Schenkel (24) aufweist, der entlang der Schienenlängsrichtung (LR) über den Kanal (12) seitlich vorsteht und/oder das Anlageelement (13) kanalseitig wenigstens eine Ausnehmung (25), insbesondere eine weitere Klebenut, umfasst.

8. Haltevorrichtung (10) nach einem de vorhergehenden Ansprüche,
**dadurch gekennzeichnet, dass**
die Öffnungen (14) der beiden Profilschienen (11) auf derselben Höhe angeordnet sind.

9. Haltevorrichtung (10) nach einem der vorhergehenden Ansprüche,
**dadurch gekennzeichnet, dass**
die Profilschienen (11) jeweils mehrere in Schienenlängsrichtung (LR) verteilte Öffnungen (14) aufweisen, wobei jeweils zwei Öffnungen (14) der beiden Profilschienen (11) auf derselben Höhe angeordnet sind.

10. Haltevorrichtung (10) nach einem der vorhergehenden Ansprüche,
**dadurch gekennzeichnet, dass**
wenigstens ein Quersteg (26) vorgesehen ist, der sich zwischen den beiden Profilschienen (11) erstreckt, wobei die Profilschienen (11) und der wenigstens eine Quersteg (26) einen Rahmen (27) bilden, wobei insbesondere der Quersteg (26) als längliches Flachmaterial (28) ausgebildet ist, das mit einer Oberfläche (29) der Profilschienen (11) fluchtet.

11. Haltevorrichtung (10) nach einem der vorhergehenden Ansprüche, insbesondere nach Anspruch 10,
**dadurch gekennzeichnet, dass**
die Profilschienen (11) und/oder die Querstege (26) aus Aluminium gebildet sind.

12. Isolierpaneel (30) mit wenigstens einer Haltevorrichtung (10) nach einem der vorhergehenden Ansprüche, wobei das Isolierpaneel (30) eine thermisch isolierende Kernschicht (31) aufweist und eine die Kernschicht (31) überziehende Deckschicht (32) aus faserverstärktem, insbesondere glasfaserverstärktem, Kunststoffmaterial, wobei die Kernschicht (31) wenigstens zwei Ausnehmungen (33) aufweist, in denen jeweils eine der Profilschienen (11) angeordnet ist, wobei die Deckschicht (32) zwischen den Profilschienen (11) und der Kernschicht (31) angeordnet ist.

13. Isolierpaneel (30) nach Anspruch 12,
**dadurch gekennzeichnet, dass**
die Profilschienen (11) jeweils mit dem Kanal (12) in die zugehörige Ausnehmung (33) einsitzen, wobei das jeweilige Anlageelement (13) an einer Stirnseite (34) des Isolierpaneels (30) zumindest teilweise anliegt und/oder die Profilschienen (11) mit der Deckschicht (32) stoffschlüssig, insbesondere durch Kleben, verbunden sind.

14. Fahrzeugaufbau (20), insbesondere eines Kühlfahrzeugs, mit wenigstens einer Haltevorrichtung (10) nach einem der Ansprüche 1 bis 11 und/oder mit wenigstens einem Isolierpaneel (30) nach einem der Ansprüche 12 oder 13.

15. Verwendung einer Haltevorrichtung (10) nach einem der Ansprüche 1 bis 11 zum Befestigen und/oder zum Halten wenigstens eines Feuerlöschers und/oder wenigstens einer Dokumentenhalteeinrichtung und/oder wenigstens eines weiteren Aggregates.
